# EUROPEAN PATENT SPECIFICATION

(11) **EP 0 746 985 B1**
(45) Date of publication and mention of the grant of the patent: **06.12.2000**
(21) Application number: 96109195.6
(22) Date of filing: 07.06.1996
(51) Int. Cl.: A23K 1/18, A23K 1/14, A23L 1/32

(54) **A method of producing a green tea egg**
Verfahren zur Herstellung von "grüner-Tee-Eiern"
Procédé d'obtention d'oeufs "au thé vert"

(30) Priority: 07.06.1995 JP 14058795
(43) Date of publication of application: 11.12.1996
(73) Proprietor: NAGATA AGRICULTURE LABORATORY INC., Tokyo (JP)
(72) Inventor: Nagata, Terikichi, Hamamatsu City, Shizuoka Pref. (JP)
(74) Representative: Wibbelmann, Jobst, Dr., Dipl.-Chem.

(56) References cited:
- WO-A-95/01104
- CHEMICAL ABSTRACTS, vol. 91, no. 23, 3 December 1979 Columbus, Ohio, US; abstract no. 191909q, A. G. KOZMANISHVILI: "New types of raw material for the mixed feed industry" page 531; column l; XP002011130 & ZHIVOTNOVODSTVO, no. 9, 1979, pages 40-41,
- PATENT ABSTRACTS OF JAPAN vol. 16, no. 168 (C-932), 22 April 1992 & JP-A-04 016151 (RIYOKUKEN KENKYUSHO), 21 January 1992,
- PATENT ABSTRACTS OF JAPAN vol. 12, no. 446 (C-546), 24 November 1988 & JP-A-63 169933 (ATSUSHI SUGANUMA), 13 July 1988,
- DATABASE WPI Week 7748 Derwent Publications Ltd., London, GB; AN 77-86199y XP002011131 & SU-A-552 066 (GEOR MIXED FEED IND) , 22 April 1977
- DATABASE WPI Week 8738 Derwent Publications Ltd., London, GB; AN 87-267936 XP002011132 & JP-A-62 186 746 (H. KATSUMATA) , 15 August 1987
- PATENT ABSTRACTS OF JAPAN vol. 18, no. 571 (C-1267), 2 November 1994 & JP-A-06 209720 (NIPPON HAIGOU SHIRYO KK), 2 August 1994,

## Description

The present invention relates to a production method for a green tea egg. The word "green tea egg" used herein means an egg produced by the method of the present invention of feeding powdery green tea to hens. Thus, in more general terms, the invention relates to the use of green tea in a feed for hens.

### Description of Related Art

Heretofore, various method of producing hens' eggs (to be referred to as "eggs", hereinafter) were proposed, and eggs having somewhat large iodine content are called "iodine eggs" and commercially sold in Japanese markets as a variety of egg.

Nowadays, hens are fed largely on poultry farms and boiled fresh fish or fish meal is one of their main feedings. In such circumstances, there arise several problems in that unpleasant smell of hens' droppings is disliked by neighboring people, a large number of hens are likely to suffer from diseases caused by excessive habitation of hens and, antibiotics or similar pharmaceuticals have to be applied to or administered to hens for curing and preventing disease, thus increasing the cost. The produced eggs have the unavoidable uncomfortable smell of fish, the eggs easily decompose and cannot be stored for a long time, and the hens and eggs are said to be a cause of atopic skin inflammation and asthma of humans who ate them.

Thus, consumers have now requested high quality eggs which are safe and sanitary.

The present invention solves these problems.

### Brief Description of the Drawings

Figure 1 shows the viscous albumen of an egg produced in accordance with this invention.

Figure 2 shows the brilliant yellow yolk and the viscous transparent albumen of an egg produced by a hen whose feed contained green tea.

Figure 3 shows the whitish yellow yolk and less viscous rather flat and translucent albumen of an egg produced by a hen whose feed did not include green tea.

### Description of Invention

In order to remove the cause of asthma and atopic skin inflammation and the uncomfortable smell of fish or fish meal, the inventor has formerly proposed a method of feeding fowls in JP-C-1,950,201. Briefly summarizing, the method comprises preparing green feeds that do not include raw fish, fish meal or animal protein. The green feed comprises mixing crops protein, such as, soybean, soybean cake, rice bran, wheat, corn and tofu (bean curd), refuse, with raw and/or dry green vegetable matter, such as, grass or vegetables, and fermentating the mixture in the presence of lactic acid bacteria to prepare a feed. The feed is fed to fowls in large amounts.

According to JP-C-1,950,201, as the green feeds, use is made of raw grass, vegetables or dried green feeds. Preferably, clover or the like plants having a large content of vegetable protein are used instead of animal protein.

Because fowls have short bowels, the green feed is made to a dry powder in some cases so as to minimize its volume. Also, instead of inner intestinal fermentation, the feed wherein the green feed is mixed with the crops and then fermented in the presence of lactic acid bacteria can facilitate digestion and absorption from bowels of hens.

Soybeans, wheat, etc., in the feed provide protein for the hens. Calories in the feed are provided by the wheat, corn or the like crops.

Chlorophyll in the green feed removes the uncomfortable smell of fish and can prevent the uncomfortable smell of fowl flesh in eggs by a masking function of the lactic acid fermentation.

However, the inventor has found out that there arises other problems in that the unpleasant smell of hens' droppings still remains and is rejected by neighboring people, the produced eggs have detrimental microorganisms, such as, Escherichia coli, etc., the eggs cannot be stored for a long time, and the eggs produced by such a method have a grassy smell of crop proteins and vegetables.

The inventor has succeeded in obtaining odorless, germless, sanitary and safe eggs by using powdery green tea in an appropriate amount.

In the past, green tea was unable to be used in a feed in poultry farms, because it was high in cost and poultry farms necessitating a low cost could not dare to use it.

Parts of tea shrubs or tea extracts were used as feed additives (CHEMICAL ABSTRACTS, vol. 91, no. 23, 3 December 1979 Columbus, Ohio, US; abstract no. 191909q, A. G. KOZMANISHVILI & ZHIVOTNOVODSTVO, no. 9, 1979, pages 40-41; DATABASE WPI Week 7748 Derwent Publications Ltd., London, GB; AN 77-86199y & SU-A-552 066 and WO-A-95 01104). Green tea, black tea or coffee or extraction residues of said materials have been mixed to conventional feed and applied to domestic animals thereby improving the meat quality of said animals (PATENT ABSTRACTS OF JAPAN vol. 18, no. 571 (C-1267), 2 November 1994 & JP-A-06 209720).

The inventor has also found out that the use of various antibiotics or similar expensive pharmaceuticals can be dispensed with by the use of powdery green tea. Therefore, the present eggs are not so expensive, though powdery green tea is used.

As the powdery green tea, use may be made of any powdery green tea. However, preferably the powdery green tea prepared by "a method of producing powdery green tea having a high Vitamin C content" as proposed in JP-C-1,415,909 is used because of its high Vitamin C content. In JP-C-1,415,909 the powdery green tea was produced in the following manner. Tea leaves having an increased Vitamin C content of at least about twice the Vitamin C content of about 50 - 62.5 mg/100g raw leaves of usual tea leaves are used. Such tea leaves may be produced by the applicant's Japanese Patent Appln. No. 57-233,17 (Japanese Patent Appln. Laid-Open No. 59-120,027 (now Japanese Patent No. 1,651,468).

Raw tea leaves (containing about 75 - 80 wt % of water) are heat treated in hot water at about 80-100°C for about 10 sec.-2 min., or in steam at a high temperature of, e.g. about 80-100°C, for about 10 sec.-3 min. Heat treating time is preferably as short as possible, because the reduction type Vitamin C and the oxide type Vitamin C are likely broken in a longer treating time. By the short treating time, the storing property of the reduction type Vitamin C is not so decreased.

The heat treated tea leaves are dried to a water content of about 3 - 10 wt %. The decrease of the water content improves the storage property and the transporting property of the heat treated tea leaves and diminishes the decrease of the reduction type Vitamin C content.

The dried tea leaves are frozen in a tank by treating by liquid nitrogen at -40 to -180°C for about 1-30 min. Because oxygen is not contained in the liquid nitrogen used, the oxide type Vitamin C also is not broken.

The frozen tea leaves are pulverized at high speed in the freezing tank or another pulverizer. The pulverization is preferably effected at the time of dissipating the liquid nitrogen as a gas or immediately after the dissipation of the liquid nitrogen to prevent oxidization of the pulverized tea leaves. The pulverization can be effected by a high speed rotating stainless steel blade, for example, and the frozen fragile tea leaves are easily and rapidly pulverized in an extremely short period of time. Fineness of the thus produced powdery green tea is slightly rougher than tea powders used in tea ceremonies, however, it may be adjusted if desired. The powdery green tea having such a high Vitamin C content is preferable, because the high content of Vitamin C can prevent oxidization of the feed and eggs and this promotes storage property of the eggs.

Summarizing briefly, the method comprises heat treating green tea leaves having a Vitamin C content of at least about 100 mg/100 g green tea leaves for a short period of time, drying the heat treated green tea leaves, freezing the dried green tea leaves by means of liquid nitrogen, and pulverizing the frozen green tea leaves, to produce powdery green tea having a Vitamin C content of at least about 500 mg/100g.

Short period of time in the heat treatment of green tea leaves is a heat treatment in boiled water at about 80-100°C for about 10 sec. - 2 min. or in steam of a high temperature of, e.g., about 80-100°C, for about 10 sec. - 3 min.

As the green tea leaves having such a high Vitamin C content, use may be made of any green tea leaves, so far as they have such a high Vitamin C content. Preferably green tea leaves having such a high Vitamin C content are prepared by the inventor's Japanese Patent No. 1,651,468. Summarizing briefly, the method comprises (1) decreasing nitrogenous component of plant-culturing soil to deprive the soil of plant-growing power, (2) intercepting water and nitrogenous fertilizer after sprouting or planting of a plant (not applying water and a nitrogenous fertilizer to the planted or sprouted plant), (3) giving a small amount of water and nitrogenous fertilizer of an amount of about 1/10 - 1/100 of conventional culturing method on the deserted soil intercepted from water and nitrogenous fertilizer, and (4) repeating the operations of (2) and (3) to form many profitable roots having high water-absorbing power and fertilizer-absorbing power.

Intercepting water means without applying water of separating the planted or sprouted plant from water.

In the present invention, powdery green tea of an amount of 0.8 - 2.5 wt/wt % is incorporated in the feed of hens. The amount of powdery green tea is preferably 1.0 - 1.5 wt/wt %.

Raw green tea leaves may also be incorporated, and in such circumstance the raw tea leaves are incorporated in the feed in an amount calculated by conversion into a dried amount thereof corresponding to an amount of powdery green tea.

Though green tea leaves may also be used in the present invention, use of powdery green tea is preferred because hens having short bowels can absorb powdery green tea more easily than green tea leaves.

According to the present invention, odorless eggs are provided not having the uncomfortable smell of fish, which do not easily decompose in a short period of time and can be stored for a long time. The eggs are also germless, sanitary, and safe and suited to be eaten without being cooked.

The present invention provides also a method of producing eggs, comprising incorporating 0.8 - 2.5 wt/wt % of powdery green tea in the feed of hens. The amount of powdery green tea is preferably 1.0 - 1.5 wt/wt %.

Powdery green tea is readily and easily mixed with the feed and easily eaten and absorbed through the bowels of hens.

The powdery green tea has a particle size of 5 mm at the maximum. Preferably, the powdery green tea has a main particle size of 75 - 150 µm, considering a homogeneous mixing thereof with the other components of the feed, for example, as follows.
≤ 75 µm 40 wt/wt %
75 - 150 µm 40 wt/wt %
≥ 150 µm 20 wt/wt %

Considering Vitamin C and the like nutrients, powdery green tea prepared by the inventor's above Japanese Patent No. 1,415,909 is more preferable, because the green tea pulverized after being frozen by means of liquid nitrogen prepared by the inventor's above method can prevent oxidization of Vitamin C and holds Vitamin C therein in high content.

From 10 days after starting the feeding of green tea to hens, albumen of the produced eggs began to show a change. At around 20 - 30 days after starting the feeding, the albumen of the produced eggs showed a transparent non-color. Albumen of usual eggs is pale yellow and not transparent.

The incorporation of powdery green tea in the feed was stopped after the hens began to produce eggs of transparent non-color albumen. 2 - 3 days after stopping feeding, the hens with feed that included powdery green tea began to produce eggs of pale yellow non-transparent albumen similarly as usual eggs. By feeding powdery green tea to hens, the unpleasant smell of hens' droppings was noticeably decreased.

Detrimental microorganisms, such as, Escherichia coli, etc., were not found in the eggs having transparent non-color albumen.

Thus, the present eggs are germless, sanitary and safe and have no smell of fish resulting from boiled fresh fish or fish meal.

In addition, the present eggs are not easily decomposed and hold their fresh state for about 10 days longer than usual eggs.

Also, the present eggs are safe and sanitary and do not incur asthmas and atopic skin inflammation, because they were produced by hens fed feed containing powdery green tea but not containing boiled fresh fish or fish meal.

The following Table shows the result of inspection of the present eggs. The inspection was performed based on Guidance for Inspecting Food Sanitary by Food Hygiene Association of Kouchi Prefecture.

**Table 1**

| (Inspection Result) Table of Inspection Result | | |
|---|---|---|
| Sample No. | Escherichia coli | Salmonella coli |
| 1 | negative | negative |
| 2 | negative | negative |
| 3 | negative | negative |

The reason why the eggs according to the invention are germless without giving antibiotics or the like to hens is considered by virtue of a sterilizing function of catechin contained in the powdery green tea.

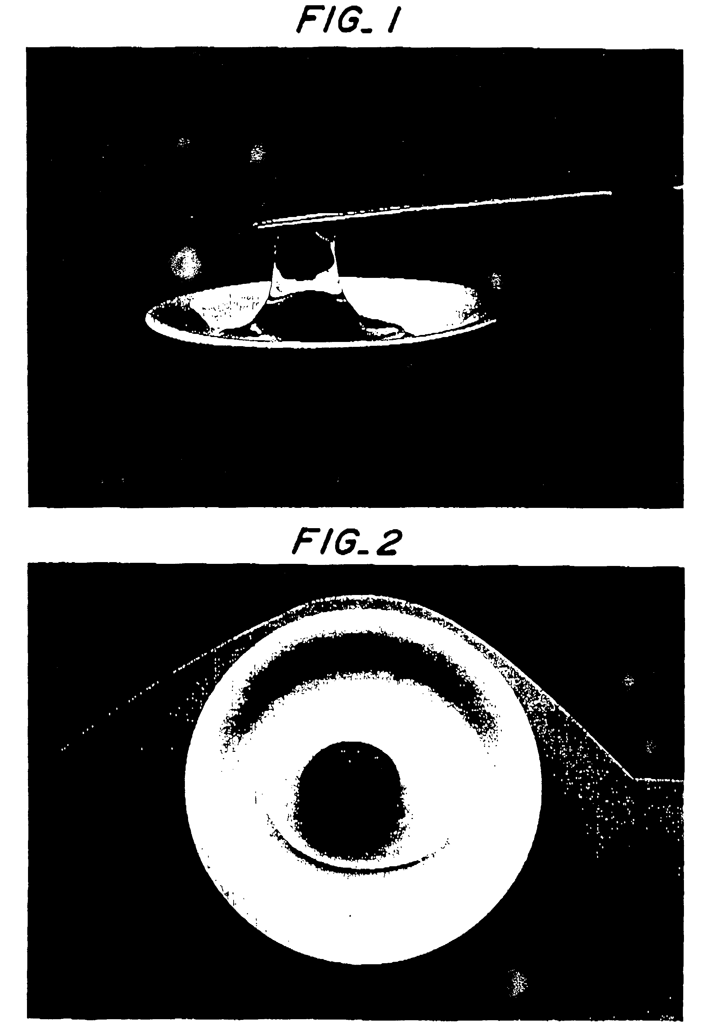

The eggs according to the invention in the fresh state have strong build-up of yolks when the eggs are split on a flat dish and strong elasticity of yolks with brilliant yellow color and have strong viscosity of albumen lasting for a long time. This is illustrated by Figure 1. The brilliant yellow color of the yolk changes to whitish yellow color with the elapse of time.

Hereinafter, the present invention will be explained in more detail with reference to Examples.

### Example 1

In this experiment, hens were fed by a feed mixed with the powdery green tea according to the present invention, and eggs produced by the hens were inspected.

1 wt/wt % of powdery green tea was incorporated in the feed of hens prepared by the method of Japanese Patent No. 1,950,201, which was discussed above.

The feed was given to 100 hens of Rockhorn type of 280 days age. Meanwhile, powdery green tea was not incorporated in the feed of the control hens (100 hens).

After about one week from starting of the feeding, some of produced eggs showed whitish translucent albumen, though the albumen was pale yellow at the time of starting the experiment.

After about two weeks from starting of the feeding, a noticeable number of produced eggs showed whitish translucent albumen and some of produced eggs showed transparent non-color and the uncomfortable smell of fish disappeared.

After about three weeks from starting of the feeding, many of produced eggs showed transparent non-color.

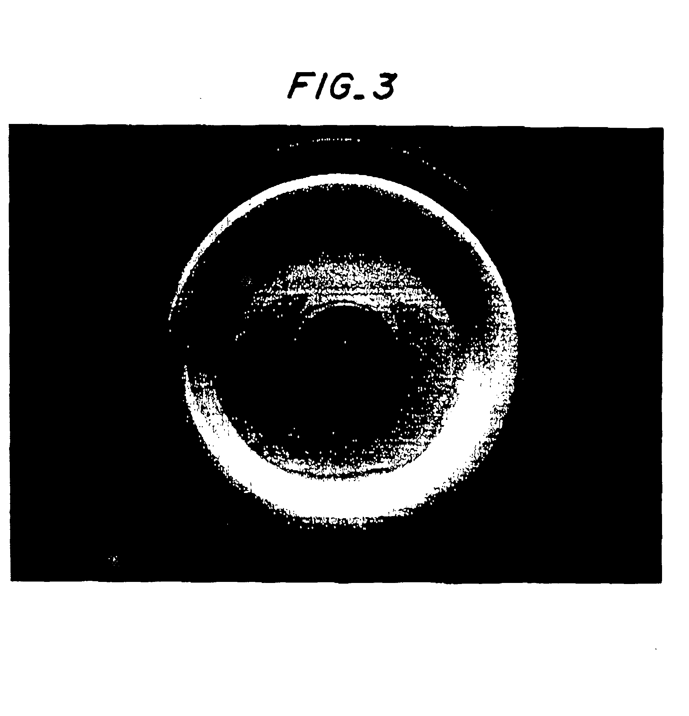

After about one month from starting of the feeding, all the albumen of the produced eggs showed transparent non-color. The eggs did not have the uncomfortable smell of fish, the albumens were viscous and did not break into pieces for a long period of time, and the unpleasant smell of hens' droppings was much decreased. Figure 2 shows the brilliant yellow color of yolk and viscous transparent albumen of the eggs from the hens whose feed contained powdery green tea. Figure 3 shows the whitish yellow yolk and less viscous rather flat and translucent albumen of the eggs produced by a hen whose feed did not include green tea.

### Example 2

Eggs were produced in the same manner as in Example 3 except that the amount of the green tea was 1.5 wt/wt %, and the produced eggs were compared with usual eggs.

After about 10 days from starting of the feeding, some of produced eggs showed whitish translucent albumen, though the albumen was pale yellow at the starting time of the experiment.

After about 20 days from starting of the feeding, a noticeable number of produced eggs showed whitish translucent albumen and some of produced eggs showed transparent non-color and the uncomfortable smell of fish disappeared.

After about 30 days from starting of the feeding, many of the produced eggs showed transparent non-color.

After about 40 days from starting of the feeding, all the albumen of produced eggs showed transparent non-color. The eggs had not the uncomfortable smell of fish, the albumens were viscous and did not break into pieces for a long time, and the unpleasant smell of hens' droppings was much decreased.

## Claims

1. A method of producing a green tea egg, comprising incorporating 0.8 - 2.5 wt/wt % of powdery green tea in a feed for hens, wherein the feed is produced by mixing crop protein with raw or dry green vegetable matter and fermenting the mixture in the presence of lactic acid bacteria.

2. The method of claim 1, wherein the amount of the powdery green tea is 1.0 - 1.5 wt/wt %.

3. The method of claim 1, wherein the powdery green tea has a Vitamin C content of at least about 500 mg/100 g.

4. The method of claim 3, wherein the powdery green tea is produced by heat treating green tea leaves having a Vitamin C content of at least about 100 mg/100 g for a short period of time, drying the heat treated green tea leaves, freezing the dried green tea leaves by means of liquid nitrogen, and pulverizing the frozen green tea leaves.

## Patentansprüche

1. Verfahren zur Erzeugung eines "grüner-Tee"-Eis, umfassend die Einverleibung von 0,8 - 2,5 Gew./Gew.-% pulverisiertem grünem Tee in ein Futter für Hennen, wobei das Futter durch Mischen von Feldfruchtprotein mit rohem oder trockenem grünem Pflanzenmaterial und Fermentieren der Mischung in Anwesenheit von Milchsäure-Bakterien erzeugt wird.

2. Verfahren nach Anspruch 1, in dem die Menge des pulverisierten grünen Tees 1,0 - 1,5 Gew./Gew.-% beträgt.

3. Verfahren nach Anspruch 1, in dem der pulverisierte grüne Tee einen Vitamin C-Gehalt von mindestens etwa 500 mg/100 g aufweist.

4. Verfahren nach Anspruch 3, in dem der pulverisierte grüne Tee erzeugt wird, indem man Blätter von grünem Tee mit einem Vitamin C-Gehalt von mindestens etwa 100 mg/100 g über einen kurzen Zeitraum wärmebehandelt, die wärmebehandelten Blätter von grünem Tee trocknet, die getrockneten Blätter von grünem Tee mittels flüssigen Stickstoffs einfriert und die gefrorenen Blätter von grünem Tee pulverisiert.

## Revendications

1. Un procédé de production d'un oeuf "au thé vert" comprenant l'incorporation de 0,8 - 2,5 % en poids de thé vert en poudre dans une nourriture pour poules, dans lequel la nourriture est produite en mélangeant une protéine d'origine végétale à des végétaux verts bruts ou secs et en faisant fermenter le mélange en présence de bactéries lactiques.

2. Le procédé de la revendication 1, dans lequel la quantité de thé vert en poudre est de 1,0 - 1,5 % en poids.

3. Le procédé de la revendication 1, dans lequel le thé vert en poudre a un contenu en vitamine C d'au moins environ 500 mg/100 g.

4. Le procédé de la revendication 3, dans lequel le thé vert en poudre est produit en traitant par la chaleur des feuilles de thé vert ayant un contenu en vitamin C d'au moins environ 100 mg/100 g pendant un court laps de temps, en séchant les feuilles de thé vert traitées par la chaleur, en congelant les feuilles de thé vert séchées au moyen d'azote liquide et en pulvérisant les feuilles de thé vert congelées.
